# EUROPEAN PATENT SPECIFICATION

(11) **EP 1 062 833 B1**
(45) Date of publication and mention of the grant of the patent: **20.10.2004**
(21) Application number: 99907759.7
(22) Date of filing: 10.03.1999
(51) Int. Cl.: H04Q 11/04, H04Q 3/00

(54) **BROADBAND SERVICE CREATION ENVIRONMENT**
UMGEBUNG ZUR ERZEUGUNG VON BREITBANDIGEN DIENSTEN
ENVIRONNEMENT DE CREATION DE SERVICES A LARGE BANDE

(30) Priority: 13.03.1998 GB 9805243
(43) Date of publication of application: 27.12.2000
(73) Proprietor: Marconi UK Intellectual Property Ltd, Coventry, CV3 1HJ (GB)
(72) Inventor: GRECH, Michael, Louis, Francis, Pewsey, Wiltshire, SN9 5AZ (GB)
(74) Representative: Cardus, Alan Peter
(86) International application number: PCT/GB1999/000719
(87) International publication number: WO 1999/048322

(56) References cited:
- EP-A- 0 669 748
- WO-A-95/23483
- US-A- 5 701 419
- MIZUNO O ET AL: "SERVICE SPECIFICATION DESCRIPTION AND SERVICE LOGIC PROGRAM GENERATION FOR INTELLIGENT NETWORKS" INTELLIGENT NETWORKS: THE PATH TO GLOBAL NETWORKING, PROCEEDINGS OF THE INTERNATIONAL COUNCIL FOR COMPUTER COMMUNICATION INTELLIGENT NETWORKS CONFERENCE, TAMPA, MAY 4 - 6, 1992, 4 May 1992 (1992-05-04), pages 430-440, XP000684038 BAYLISS P W (ED )ISBN: 90-5199-091-X
- KOLEHMAINEN M: "NOKIA SCE - AN ARCHITECTURE FOR A LIGHTWEIGHT SCE" INTELLIGENT NETWORKS AND NEW TECHNOLOGIES. PROCEEDINGS OF THE IFIP TC6 CONFERENCE ON INTELLIGENT NETWORKS AND NEW TECHNOLOGIES, COPENHAGEN, AUG. 30 - 31, 1995, 30 August 1995 (1995-08-30), pages 107-118, XP000751740 NORGAARD;J; IVERSEN; V B (EDS )ISBN: 0-412-78900-0

## Description

### 1. Introduction

A graphical service creation environment capable of creating Intelligent Network (IN) services for a Broadband-Integrated Services Digital Network/Intelligent Network (B-ISDN/IN) network is described. This broadband service creation environment is based on an extension of an equivalent narrowband product such as GAIN INventor supplied by GPT Limited. GAIN INventor is one of a family of products based on the UNIX™ operating system and a Service Logic Execution Environment (SLEE). The SLEE is designed to support telecommunication services Service Logic Programs and is based on the SLEE API defined in the Bellcore AIN 1.0 standard. As well as residing on the INventor, the SLEE resides on the target environment, the Service Control Point (SCP). One of INventor's features is the graphical service creation environment which allows the creation of telecommunication services using graphical icons connected together to form a service picture. The service picture is a general logical description of a service without any explicit reference to the Service Control Function (SCF/SSF) or Service Switching Function (SRF) interface messages other than those at a higher level.

Section 2 is provided as background material. The approach within the project has been to provide switched broadband services which are extensions to the classical IN architecture as this does not dramatically change the typical service deployment architecture. The Service Switching Points (SSP), Service Control Points (SCPs) and Intelligent Peripherals (IP) have been enhanced to cope with the broadband functionality. The broadband SCP (B-SCP) is realised as enhancements to an existing narrowband functionality. The broadband SCP (B-SCP) is realised as enhancements to an existing narrowband product. Service logic programs required to provide the complex broadband services to run on the B-SCP have been created using a broadband graphical environment (B-SCE)

Mizuno et al in "Service Specification Description and Service Logic Program Generation for Intelligent Networks" Intelligent Networks : The Path to Global Networking, Proceedings of the International Council for Computer Communication Intelligent Networks Conference, Tampa, May 4-6, 1992, pages 430-440, discloses a narrowband graphical service creation environment for creating Intelligent Network Services for an Intelligent Network comprising an intelligent editor which comprises building blocks; a picture editor and code generator; the building blocks being a collection of specific actions, data access and data manipulation routines and pictorial blocks that define the graphical layout of the service.

According to the present invention there is provided a broadband graphical service creation environment for creating Intelligent Network services for a Broadband Integrated Services Digital Network/Intelligent Network network, the broadband graphical service creation environment comprising building blocks, a picture editor and code generator, the building blocks being a collection of broadband specific actions, data access and data manipulation routines plus pictorial blocks that defme the graphical layout of the service and further comprising Generic Service Building Blocks capable of running a specific message sequence, characterized in that the specific message sequence may be interrupted by some asynchronous events, wherein once an event is handled, the original message sequence is resumed.

The present invention will now be described by way of example, with reference to the accompanying drawings, in which:-
Figure 1 shows the Entity Relationship Diagram fo the Switching State Model;
Figure 2 shows the State Diagram for the Legs of Figure1;
Figure 3 shows the State Diagram for the Connection of Figure 1;
Figure 4 shows the Finite State Machine for the Broadband Service Control Function ;
Figure 5 Shows the Message Sequence for the *AddBearer* Option in the *BearerControl* Generic Service Blocks;
Figures 6A and 6B combined show the Runtime Action of the *AddBearer* Option in the *BearerControl* GSBB;

### 2. IN based broadband services

The most significant impacts of a broadband network on IN with respect to service creation are:
- the number of B-ISDN calls that can comprise an IN service are now numerous;
- in dealing with the events relating to the multiple calls, the sequence of arrival of messages at the service logic can be unpredictable;
- the interaction between the network and user that arises from broadband services is of increased complexity.

Solutions to these problems include introducing a switching state model in the Service Switching Function, a finite state machine in the Service Control Function that copes with the asynchronous messages, and by introducing a "very intelligent" Intelligent Peripheral to handle the complex user interaction.

### 2.1 Switching State Model

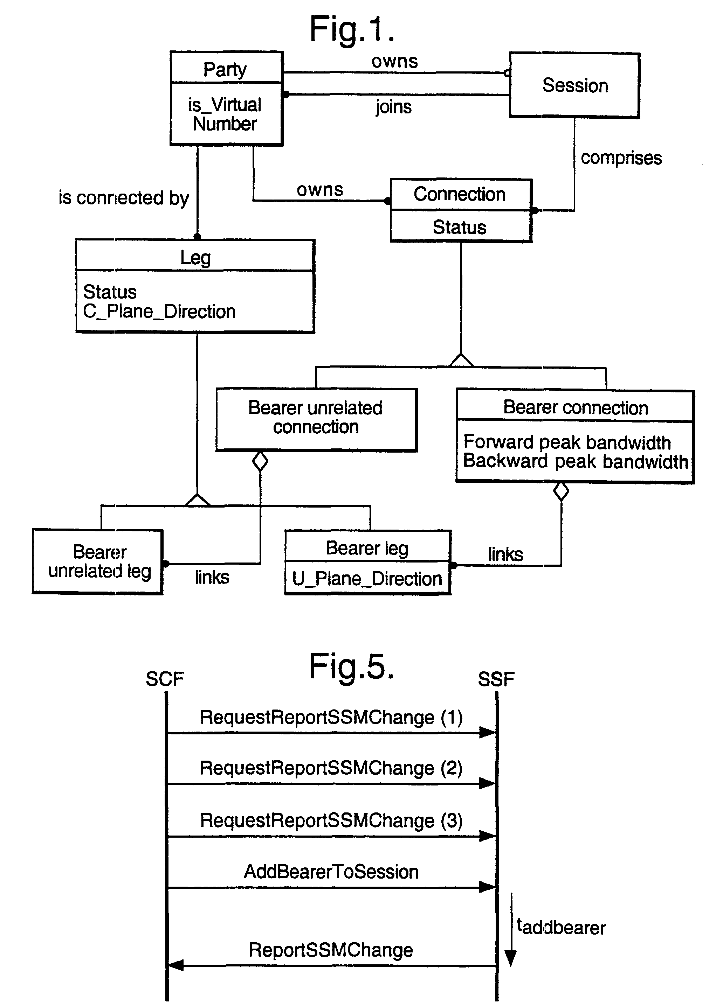

The Switching State Model (SSM) is a function within the B-SSP that has the task of coordinating the events and detection points (DPs) from the several Basic Call State Models that form a service session. It offers an object-oriented view of the network elements and resources of the call control function (CCF) to the service logic. This object model removes the complexity at the B-SCP to co-ordinate the DPs at the service logic. The model is capable of representing both abstract attributes like ownership of the session, as well as more concrete elements of the call like parties and connections. Figure 1 shows the entity relationship diagram for the switching state model.

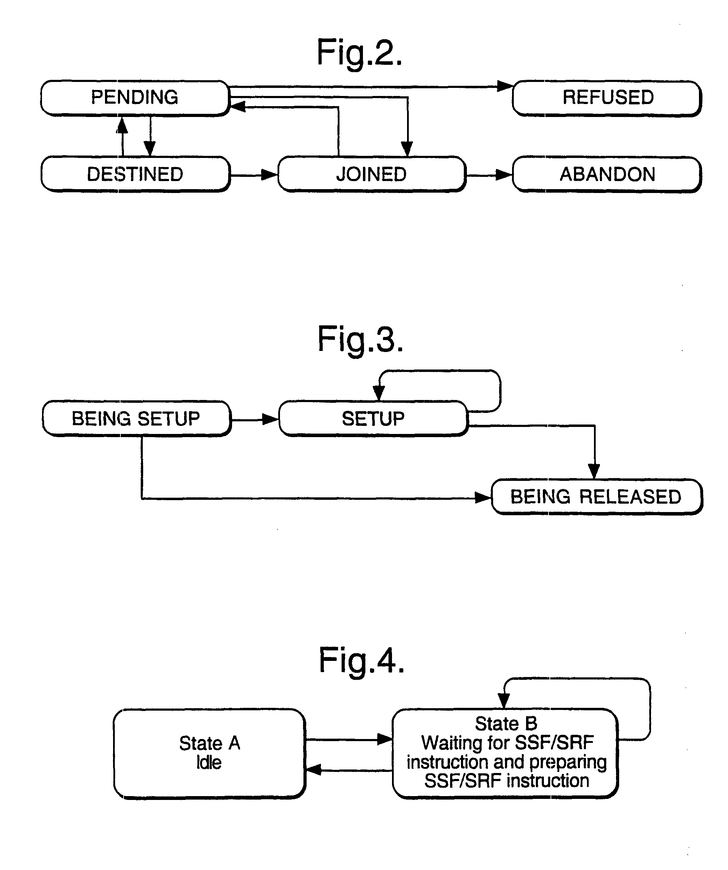

Within this model several parties can join a session, where a session is a representation of a complete call configuration as seen by an IN service, and a party represents real end users or network nodes like the B-IP or even the B-SCP. Between such parties, connections can be established, where connections can either be bearer related or bearer unrelated. A connection is composed of several legs, where the leg represents the communication path to a party which is connected to other parties by a connection. A significant attribute of connections and legs is the status. This represents the status of the respective object in the call processing. Figures 2 and 3 show the state diagrams for the bearer and leg objects. Changes in the status attribute of legs and connections can be reported to the service logic when a state change takes place.

### 2.2 The Broadband INAP

The information flows between the B-SCF and the B-SSF are based on the abstract representation of the SSM model. The B-SCF is only able to manipulate the objects in the model, and as a result the operations for the information flows only allow such object manipulation.

The protocol between the B-SSP and B-SCP that has emerged is based on the manipulation of the objects represented in the SSM model. Verbs such as *Add and Delete* are applied to objects such as parties and connection to provide this protocol. For example if the service logic wishes to add a new bearer connection between two parties in the existing IN session, the operation *AddBearerToSession* is uses to instruct the B-SSP to perform this operation. This has led to a Broadband IN Application Protocol (B-INAP) that is different from the current IN-CS 1 or 2 standard but has similarities with the emerging IN-CS3.2 standard. The B-SCP maintains its own view of the SSM model as relationship information is transmitted in the information flows. The model in the B-SCF is aligned with the model in the B-SSP which means that if an event changing the SSM state occurs, a communication flow is used to keep the SSM state aligned in the two nodes. State changes occur as a result of an event notified by the B-CCF, in which case B-SSF to B-SCF information flow takes place. The control as to which state changes are reported to the service logic is under the control of the service logic itself. The service logic must send requests to the B-SSP so that the particular state changes that occur are reported. For example, in the *AddBearerToSession* operation mentioned above, in order for the service logic to receive notification that the bearer connection has been set up, it must send a *RequestReportSSMChange*, specifying the transition *BeingSetUp* to *SetUp* prior to sending the message. Thus when the network connection is actually set up, the service logic is informed about the establishment of the connection via an operation *ReportSSMChange* that indicates that the bearer status has changed to the state *SetUp*.

### 2.3 B-SCF finite state machine

A significant consequence of the SSM and the B-INAP as far as the B-SCP is concerned is the finite state machine on the access side. After the receipt of the message which triggers the service logic, the *ServiceRequest,* the B-SCP has to explicitly arm the necessary SSM state changes in order to keep track of the status of the calls and/or connections. The service logic needs to be informed when connections are released for any reason, and as this is achieved by means of a *ReportSSMChange* message, the service logic must be in a position to accept such a message in any state after the IN service logic is triggered. Figure 4 shows the finite state machine that the B-SCP access manager must be able to cope with State A represents the idle state where the service logic is waiting for the initial IN trigger (*ServiceRequest*). With this event the state changes to State B. This is an all encompassing state where messages are prepared for sending to the B-SSP but importantly it must also be able to accept messages from the B-SSP during this state. This is due to the fact that calls and/or connections can be released at any time which results in a notification to the service logic.

### 2.4 User Interaction

In the services considered, end users using a set top box can enter an interactive phase of the service, or navigation which allows the user to enter passwords, update service profiles or make selections that influence the IN service logic. As each service has different requirements, two approaches to user interaction were developed. For simple and generic interaction which is intended to work together with any end system, the feature User Service Interaction (USI) has been introduced. This uses a signalling connection between the end system and the B-SCP to convey user service information. For complex multimedia interaction, a broadband Specialised Resource Function (B-SRF) that supports GUI based interaction with the end system has been introduced.

Connection Oriented Bearer Independent (COBI) has been adopted as a transport means to allow direct interaction between user and service logic. The handling of call related events and call unrelated events are presented in a unified view to the B-SCP by the IN-SSM model. The B-SRF provides the same functionality as the narrowband case with the main exceptions that it consists of its own logic and processing capability to work together with the broadband CPE in providing the services in a user friendly way and that it interacts with the network through a specialised interface to the B-SCF. The creation of service logic that resides on the B-SRF is not considered but tools for creating the service logic that reside and are executed on the B-SCF are considered.

### 3. A Service Creation Environment for broadband IN services

The narrowband service creation environment is based on the logical connections of graphical building blocks, referred to as *Generic Service Building Blocks* (or GSBBs) herein, however the concepts can be equally applied to a broadband environment. The GSBBs are an approach to the *Service Independent Block,* or SIB concepts in IN-CS-1. The SCE consists of a finite number of GSBBs that can be selected and customised in a GSBB. Customised instances of the GSBBs or *icons,* are placed on a sketcher and linked together to form the service logic flow required into a picture file. A code generator converts the picture file into run time files required to run the service. There are broadly speaking three classes of GSBBs. *INAP dependent GSBB, INAP independent GSBBs and pictorial GSBBs*. The first class, the INAP *dependent* GSBBS translate into a sequence of B-INAP messages that are exchanged between the B-SCP and B-SSP and/or B-IP. INAP independent GSBBs perform operations that do not relate to INAP operations. The majority relate to database manipulation but also include variable manipulation and service logic flow control. The pictorial class only impacts the layout of the service picture.

The approach within the broadband SCE created was to reuse the existing SLEE within the narrowband product, but develop new INAP dependent GSBBs to handle the functions required by the B-INAP plus new infrastructure ones to support the broadband functionality such as the abstract view introduced by the Switching State Model and the finite state machine of the service logic.

### 3.1 Generic Service Building Blocks for broadband services

GSBBs that depend on the new B-INAP, or *B-INAP dependent* GSBBs together with new GSBBs to take into account the impact of the broadband services have been developed. Significantly, B-INAP dependent GSBBs in the original product were retained and are successfully reused without changes. The B-INAP dependent GSBBs developed fall into the following categories:
- Call Control GSBBs
- B-SRF interaction GSBBs
- User-Service Interaction GSBBs
- Other miscellaneous B-INAP dependent GSBBs

The call control GSBBs perform all the necessary operations that allow the connections to be established and deleted between users in the IN service session. The B-SRF interaction GSBBs handle all the operations that instruct the B-SRF to run script based interaction with the user as well as collecting information from the user. The User Interaction GSBBs allow the service logic to handle the end-to-end protocol between the user and the service logic, where the service creator can construct and extract messages to and from the user. Other GSBBs developed allow the triggering and correct termination of IN services and GSBBs that allow the collection of buffered SSM events as a result of the finite state machine implemented for the B-SCP.

For the call control GSBBs, instead of providing a complete view of the SSM, the service creator is only aware of parties and bearer related/bearer unrelated connections. The service creator uses the dictionary number to reference the party objects and uses the identifiers to identify bearers and has no actual visibility of leg objects. The service infrastructure handles the complex association of objects and identifiers performing the necessary mapping into the SSM model. This has the advantage that the service creator needs not be concerned with the complex object associations and relationships that exist.

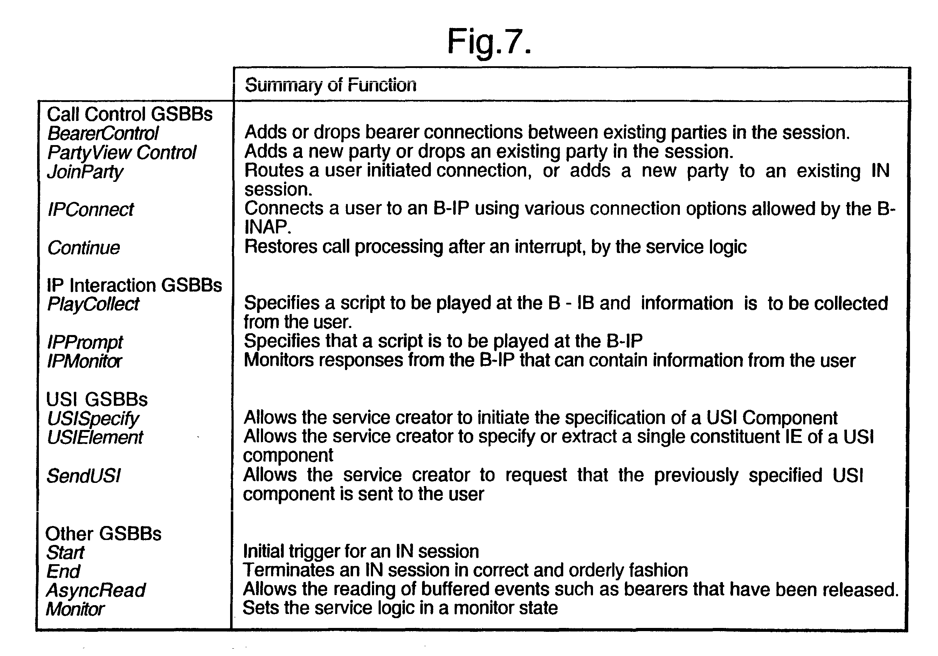

Figure 7 provides a list of possible GSBBs. All GSBBs relating to database access were retained without any modifications. These data access GSBBs allow for example the look up for time of day routing or area of origin determination. As there is no impact of a broadband network, the building blocks are unaffected. A GSBB that allows the service creator to define a customised data access caters for any special needs of the broadband services.

### 3.2 GSBB message sequence

Each of the B-INAP dependent GSBBs translates into a sequence of messages that are exchanged between the B-SCP and the B-SSP and/or B-IP. This message sequence is translated from a dynamic description of the GSBB where the information in the messages is populated for a combination of the values inserted by the service creator from a graphical user interface, the SSM model and the service infrastructure. The GSBBs have been created to reflect the type of B-INAP operation. Again, verbs such as *Add and Delete* have been applied to describe the permissible actions in the GSBB. However such actions are restricted to connections or real end users. The action of the GSBB will result in either the creation or deletion of all the necessary SSM objects in the B-SSP. For example one of the new GSBBs developed, the *BearerControl* GSBB allows the selection of either the deletion of an existing bearer connection or the creation of a new bearer connection between two existing parties. These actions will map on the *DeleteBearer* or *AddBearerToSession* B-INAP operations. When a new bearer connection is requested, new objects relating to the bearer connection and its associated legs are created. Within the B-SCE this is done automatically by the infrastructure thus removing this task form the service creator. This ensures that consistent SSM information is inserted in the messages to the B-SSP. The service creator needs to supply the bearer characteristics (e.g. bandwidth, class, etc.) and the directory number of the parties that are to share the bearer connection.

Each GSBB has a specific message sequence description that describes the messages that are exchanged between the B-SCP and the B-SSP and/or the B-IP. The replies from the B-SSP take the form of state changes relating to objects. The communication indicating this state change will only be sent if the service logic had previously sent a specific message requesting to be informed about the state changes. Part of the GSBB's function is to arm all necessary state changes in the SSM model to allow the GSBB to be informed of the outcome of the request of the required operation. Each call control GSBB automatically arms the necessary state change requests in the form of *RequestReportSSMChange* so that it will always be notified about the outcome of a call control request.

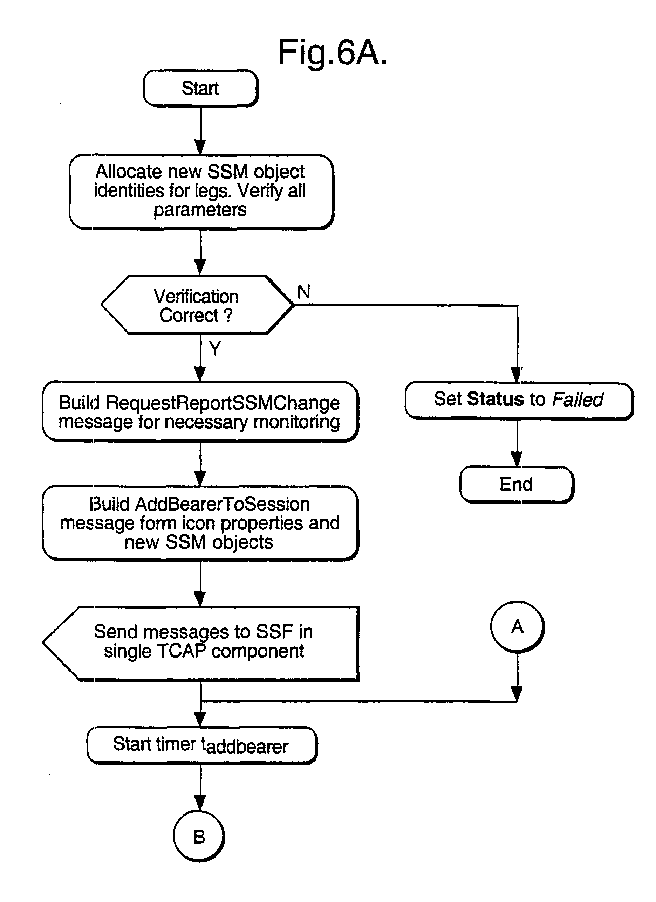

Figure 5 shows the message sequence exchanged between the service logic and the B-SSP when the *AddBearer* option in the *BearerControl* GSBB is selected. Note, however this shows the expected message sequence under normal conditions and excludes the possibilities of exceptions occurring. The three *RequestsReportSSMChanges* individually arm the state changes that would indicate whether the bearer has been set-up, or either of the end parties has refused to accept the call, or either of the parties has abandoned the call. The GSBB has a status field that will be populated with a value that indicates the outcome of the *AddBearer* request. Additional GSBBs are available to allow the service creator to test the possible values of the status field and take appropriate action in the service picture.

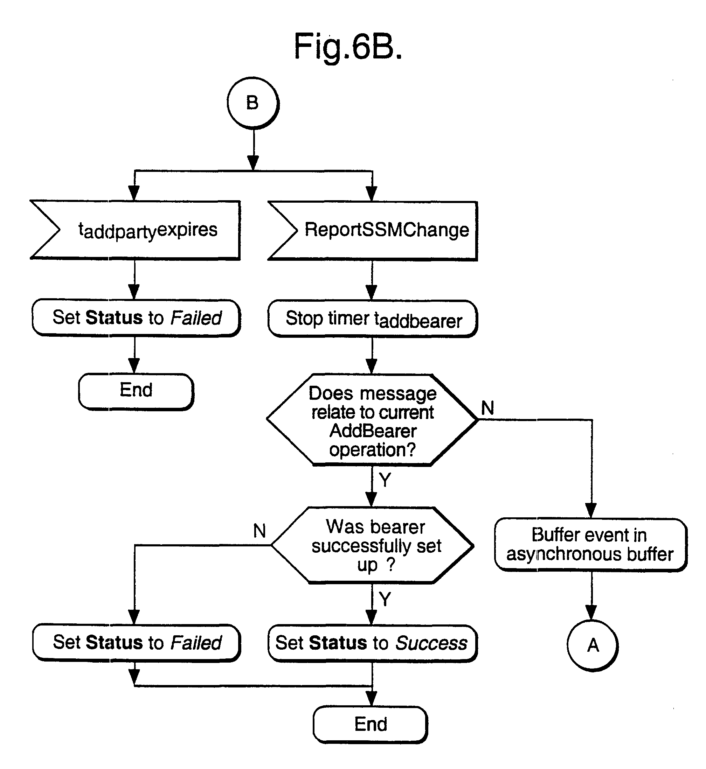

In order to simplify the service creation process, the GSBBs will only allow sequential operations to be performed. That is, until a notification of outcome of the operation is reported, the GSBB will now allow another operation to be performed. As sequential operations are performed, it is possible that a state change is reported that does not relate to the operation that the GSBB has been asked to perform, i.e. for example the release of a separate bearer connection within the same IN session. In such a case the normal message sequence is interrupted to allow this message to be read and its content buffered as an asynchronous event. This is evident in the run-time flow description of the GSBB in figures 6A and 6B. Once the event is buffered, the GSBB will resume its normal action as dictated by the dynamic description. Additional GSBBs have been provided to test and read for such buffered events to allow them to be handled as dictated by the service requirements.

### 3.3 GSBB run-time action

In addition to a message sequence file, each GSBB has an associated *run-time action file* that describes the actions that the icon will perform. The actions cannot be altered by the service creator once the appropriate GSBB operation has been selected. Figure 6 shows the run-time actions for the AddBearer option in the BearerControl GSBB as described by the message sequence in figure 5.

### 3.4 Service Creation Environment Architecture

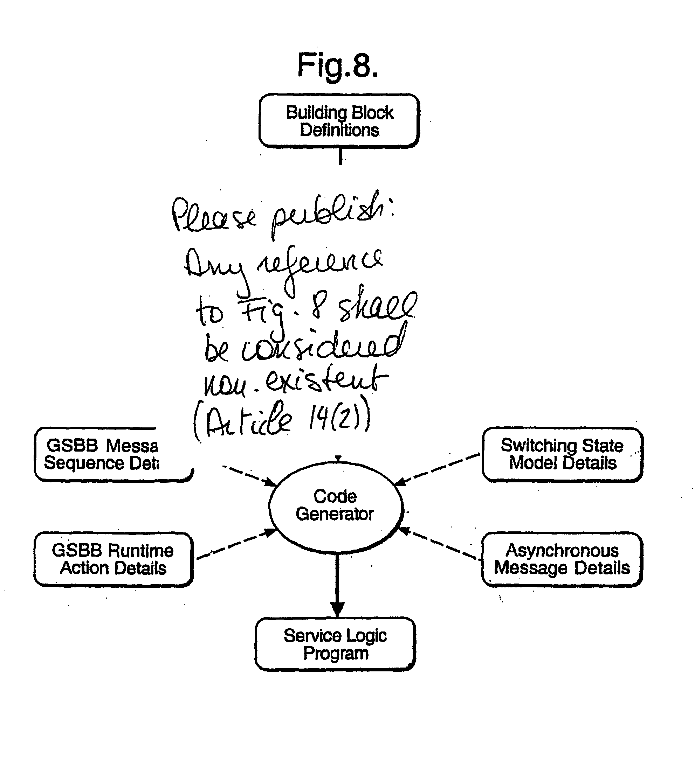

The central architecture of the B-SCE is shown in figure 8. The architecture has three distinct domains: *building block definition,* picture editor and *code generation.*

The *building block definition* is the stage where the generic service building blocks themselves are defined. These include the definition of the message sequence chart described in section 3.2, the runtime actions described in section 3.3. The separation between this definition and the graphical picture editor means that future capabilities are not constrained by the graphical editor.

The *picture editor* is a graphical tool that allows the service creator to select the building blocks from a palette and drag them to a drawing area. They can then be linked together to form a logic flow required by the service requirements. Each building block consists of a property sheet that contains input fields, menus and selection buttons are used to specify the detailed operation. Such a detailed operation may relate to a decision branch criteria, user interaction information to be sent to the end user or the bearer characteristics required to set up a particular bearer connection. The output of the picture editor is a general logic description of a service, without any explicit reference to the B-INAP other than those at a higher level.

This picture file is acted upon by the *code generator* to create runtime files required to execute the service on a B-SCP. As the picture files do not contain any information about the messages, the code generation uses the GSBB message sequence details and runtime actions to perform the necessary translations for the B-INAP operations. In addition, SSM details and the asynchronous message library details are also used by the code generator to produce the ANSI C source code for the Service Logic Program.

### 4. Conclusion

The application of an Intelligent layer to broadband networks can be facilitated by a graphical service creation environment. A flexible narrowband system can be expanded to provide the additional complexity imposed by this environment. To realise the services utilising this environment such as advanced broadband video-conferencing the separated control of connections is essential, together with the asynchronous handling of events.

In addition service logic will be required to interwork with complex nodes such as Intelligent Peripherals to provide the User with comparable service navigation techniques.

## Claims

1. A broadband graphical service creation environment for creating Intelligent Network services for a Broadband Integrated Services Digital Network/Intelligent Network network, the broadband graphical service creation environment comprising building blocks, a picture editor and code generator, the building blocks being a collection of broadband specific actions, data access and data manipulation routines plus pictorial blocks that define the graphical layout of the service and further comprising Generic Service Building Blocks capable of running a specific message sequence, **characterized in that** the specific message sequence may be interrupted by some asynchronous events, wherein once an event is handled, the original message sequence is resumed.

2. A broadband graphical service creation environment as claimed in Claim 1, wherein the service creation environment is able to generate Service Logic Programs that can support a finite state machine.

## Patentansprüche

1. Grahpische Erstellungsumgebung von Breitbanddiensten zur Erstellung von IN-Diensten für ein Dienstintegrierendes Digitales/Intelligentes Breitbandnachrichtennetz, wobei die graphische Erstellungsumgebung von Breitbanddiensten Baueinheiten, einen Bildeditor und einen Code-Generator aufweist, wobei die Baueinheiten eine Anzahl von bestimmten Breitbandfunktionen, Datenzugriffs- und Datenverarbeitungsroutinen plus Bildblöcke sind, die die graphische Gestaltung des Dienstes definieren, und außerdem Baueinheiten für generische Dienste aufweist, die fähig sind, eine bestimmte Nachrichtenfolge durchzuführen,
**dadurch gekennzeichnet,**
**daß** die bestimmte Nachrichtenfolge durch irgendwelche asynchronen Ereignisse unterbrochen werden kann, wobei die ursprüngliche Nachrichtenfolge wiederaufgenommen wird, sobald ein Ereignis bearbeitet wird.

2. Graphische Erstellungsumgebung von Breitbanddiensten nach Anspruch 1, wobei die Erstellungsumgebung logische Dienstprogramme erzeugen kann, die eine Maschine endlicher Zustände unterstützen können.

## Revendications

1. Environnement de création de services graphiques large bande pour créer des services de réseau intelligent pour un réseau numérique large bande à intégration de services/réseau intelligent, l'environnement de création de services graphiques large bande comprenant des blocs de construction, un éditeur d'images et un générateur de codes, les blocs de construction étant un ensemble d'actions spécifiques large bande, de sous-programmes d'accès à des données et de manipulation de données plus des blocs picturaux qui définissent l'agencement graphique du service et comprenant, en outre, des blocs de construction de services génériques capables d'exécuter une séquence de messages spécifique, **caractérisé en ce que** la séquence de messages spécifique peut être interrompue par certains événements asynchrones, dans lequel une fois qu'un événement est traité, la séquence de messages d'origine est reprise.

2. Environnement de création de services graphiques large bande selon la revendication 1, dans lequel l'environnement de création de services est capable de générer des programmes logiques de services qui peuvent prendre en charge une machine à états finis.
